# EUROPEAN PATENT APPLICATION

(11) **EP 1 507 019 A1**
(43) Date of publication of application: **16.02.2005**
(21) Application number: 04254574.9
(22) Date of filing: 30.07.2004
(51) Int. Cl.: C23C 4/02, C23C 4/00, C23C 14/02, C23C 16/02

(54) **Upgrading aluminide coating on used turbine engine component**

(30) Priority: 11.08.2003 US 638581
(71) Applicant: General Electric Aviation Service Operation (PTE) Ltd., Singapore 508726 (SG)
(72) Inventor: Chen, Keng Nam, Singapore 465800 (SG); Ngiam, Shih-Tung, Singapore 359231 (SG)
(74) Representative: Pedder, James Cuthbert

(57) **Abstract**

A method of upgrading an aluminide coating on a used turbine engine component to a platinum aluminide coating. The method involves cleaning at least one surface of the component to remove hot corrosion products from the surface without damaging the aluminide coating. In one embodiment, the cleaning step involves immersing the component in a heated solution comprising acetic acid while agitating the solution using ultrasonic energy. A layer of platinum is then deposited onto the cleaned surface of the component. A second aluminide coating is then formed on the surface of the component to upgrade the component. The invention also relates to a turbine engine component, e.g., a turbine blade, having a metal-based substrate and a platinum aluminide coating on at least one surface thereof, which coating has been upgraded from an aluminide coating originally on the component using the above method.

## Description

This invention relates to a method for upgrading an aluminide coating on a used turbine engine component to a platinum aluminide coating. More particularly, this invention is directed to such a method that comprises cleaning at least one surface of the component to remove hot corrosion products from the surface without damaging the aluminide coating, depositing a layer of platinum onto the cleaned surface, and then forming a second aluminide coating on the surface of the component. The invention also relates to such an upgraded used turbine engine component.

The operating environment within a gas turbine engine is both thermally and chemically hostile. Significant advances in high temperature alloys have been achieved through the formulation of iron, nickel and cobalt-base superalloys, though components formed from such alloys often cannot withstand long service exposures if located in certain sections of a gas turbine engine, such as the turbine, combustor and augmentor. A common solution is to protect the surfaces of such components with an environmental coating that is resistant to oxidation and hot corrosion. Coatings that have found wide use for this purpose include diffusion aluminide coatings and overlay coatings such as MCrAIY (where M is iron, nickel and/or cobalt), which may be overcoated with a diffused aluminide coating. During high temperature exposure in air, these coatings form a protective aluminum oxide (alumina) scale that inhibits oxidation of the coating and the underlying substrate. Diffusion aluminide coatings are particularly useful for providing environmental protection to components equipped with internal cooling passages, such as high-pressure turbine blades, because thin aluminide coatings are able to provide environmental protection without significantly reducing the cross-sections of the cooling passages. Platinum aluminide coatings have been developed to further improve resistance to corrosion and oxidation damage.

Hot corrosion of gas turbine engine components generally occurs when sulfur and sodium react during combustion to form sodium sulfate (Na₂SO₄), which condenses on and subsequently attacks the components' surfaces. Sources of sulfur and sodium for such reactions include impurities in the fuel being combusted as well as the intake of sodium-laden dust and/or ingestion of sea salt. In the latter situation, hot corrosion typically occurs on hot section turbine blades and vanes under conditions where salt deposits on the surface as a solid or liquid. The salt deposits can break down the protective alumina scale on the aluminide coating, resulting in rapid attack of the coating.

During rejuvenation, refurnishing or upgrading of used turbine engine components, aluminide coatings typically are completely removed to allow component repair by welding or brazing or to replace damaged coatings. A new aluminide coating can then be applied by any suitable process. Any hot corrosion products present on the coating are removed with the coating. A disadvantage of completely removing an aluminide coating from a turbine engine component is that a portion of the substrate metal is removed with the coating, which can significantly shorten the useful life of the component. As a result, new repair technologies have been proposed by which diffusion aluminide coatings are not removed, but instead are rejuvenated to restore the aluminide coating and the environmental protection provided by such coatings. However, coating rejuvenation technologies for turbine blade and vane repair cannot be used in the presence of hot corrosion products, which attack the rejuvenated coating upon exposure to engine temperatures.

Used turbine engine components that have been coated with aluminide coatings can be recoated with platinum aluminide coatings to improve corrosion and oxidation resistance. However, current processes for recoating typically involve removing the aluminide coating by chemical stripping, grit blasting or other mechanical means. As noted above, these processes often result in the removal of a portion of the substrate metal, which can reduce the strength and useful life of the component.

Thus, there is a continuing need for a method to upgrade an aluminide coating on a used turbine engine component to a platinum aluminide coating without damaging the coating or removing a significant amount of the substrate metal.

In one aspect, the invention relates to a method for upgrading an aluminide coating on a used turbine engine component to a platinum aluminide coating, said method comprising:
a) cleaning at least one surface of the component to remove hot corrosion products from the surface without damaging the aluminide coating;
b) depositing a layer of platinum onto the cleaned surface of the component; and then
c) forming a second aluminide coating on the surface of the component.

In another aspect, the invention relates to a method for upgrading an aluminide coating on a used turbine engine component to a platinum aluminide coating, said method comprising:
a) cleaning at least one surface of the component to remove hot corrosion products from the surface without damaging the aluminide coating by immersing the component in a solution comprising acetic acid;
b) depositing a layer of platinum having a thickness of from about 2 to about 20 microns onto the cleaned surface of the component; and then
c) forming a second aluminide coating having a thickness of from about 10 to about 100 microns on the surface of the component.

In yet another aspect, the invention relates to a turbine engine component having a metal-based substrate and a platinum aluminide coating on at least one surface thereof, said coating having been upgraded from an aluminide coating originally on the component using the above method.

The invention will now be described in greater detail, by way of example:-

As used herein, the term "aluminide coating" is meant to include a variety of materials typically used in coating metal alloys (especially superalloys), or which are formed during or after the coating process. Non-limiting examples include simple aluminide, nickel aluminide, cobalt aluminide, refractory-doped aluminide, or alloys comprising one or more of those compounds. A "platinum aluminide coating" can be any such aluminide coating further comprising platinum.

The substrate of the present invention can be any metallic material or alloy typically protected by an aluminide coating. As used herein, "metallic" refers to substrates that are primarily formed of metal or metal alloys, but which may also include some non-metallic components. Non-limiting examples of metallic materials comprise at least one element selected from the group consisting of iron, cobalt, nickel, aluminum, chromium, titanium, and mixtures thereof (e.g., stainless steel).

Often, the substrate is a heat-resistant alloy, e.g., a nickel-based material or cobalt-based material. Such materials are described in various references, including U.S. Patents 5,399,313 and 4,116,723. The type of substrate can vary widely, but it is often in the form of a jet engine part, such as an airfoil component. As another example, the substrate may be the piston head of a diesel engine, or any other substrate requiring a heat-resistant or oxidation-resistant coating. The substrate may also be in the form of a houseware item (e.g., cookware), or other industrial hardware or equipment.

The metallic material is often a superalloy, typically nickel-, cobalt-, or iron- based, although nickel- and cobalt-based alloys are favored for high-performance applications. The base element, typically nickel or cobalt, is the single greatest element in the superalloy by weight. Nickel-based superalloys usually include at least about 40% Ni, and at least one component selected from the group consisting of cobalt, chromium, aluminum, tungsten, molybdenum, titanium, and iron. Examples of nickel-base superalloys are designed by the trade names Inconel®, Nimonic®, and René®, and include directionally solidified and single crystal superalloys. Cobalt-based superalloys usually include at least about 30% Co and at least one component from the group consisting of nickel, chromium, aluminum, tungsten, molybdenum, titanium, and iron. Examples of cobalt-based superalloys are designated by the trade names Haynes®, Nozzaloy®, Stellite® and Ultimet®.

The aluminide coating on the substrate may be applied in a variety of locations on a component. In the case of a turbine engine, the coating is often applied on combustor liners, combustor domes, shrouds, airfoils, including buckets or blades, nozzles, and vanes. The coating can be found on the flat areas of substrates, as well as on curved or irregular surfaces. The coating may also be formed on the surfaces of internal cavities in the substrates, e.g., indentations, hollow regions, or holes. For example, the cavities can be in the form of radial cooling holes or serpentine passageways, which can have an overall length of up to about 30 inches (about 76.2 cm) in turbine engine airfoils.

The thickness of the aluminide coating will depend on a variety of factors. These include the length of service time for the component, its thermal history, and the particular composition of the coating and substrate. Usually the coating has a thickness in the range of from a few microns to about 150 microns, typically from about 10 microns to about 100 microns and most often from about 25 microns to about 75 microns.

The present invention provides a method for upgrading an aluminide coating on the surface of a used gas turbine engine component to a platinum aluminide coating. Such turbine engine components include the high and low-pressure turbine nozzles and blades, shrouds, combustor liners and augmentor hardware of gas turbine engines. While the advantages of this invention will be described with reference to gas turbine engine components, the invention is generally applicable to any component having an aluminide coating that would benefit from being upgraded to a platinum aluminide coating without first removing the aluminide coating.

The method of this invention comprises the step of cleaning the surface of the component to remove hot corrosion products from the surface of the component without damaging the aluminide coating. The cleaning step may include conditioning or activating the surface to be cleaned by processing through caustic autoclave or grit blasting operations, immersing the component in a heated liquid solution comprising a weak acid, and/or agitating the surfaces of the component while it remains immersed in the solution. In this manner, the hot corrosion products on the surfaces of the component can be removed without damaging or removing the diffusion aluminide coating.

Cleaning the surface of the component may occasionally result in slight pitting, or in a small amount of corrosion of the substrate, which is typically substantially uniform. As used herein, "uniform corrosion" refers to the removal of a very thin, continuous layer of the substrate, usually less than about 2 microns in thickness. Uniform corrosion and slight pitting are not a significant drawback for some end uses of the substrate. This is in contrast to the occurrence of severe "pitting", which results in holes in the substrate, often to a depth of at least about 25 microns, and usually to a depth in the range of from about 25 microns to about 500 microns.

Cleaning compositions used herein may be applied to the component in a variety of ways. In some embodiments, the component is immersed, either partially or fully, in a bath of the composition. Immersion in this manner (in any type of vessel) often permits the greatest degree of contact between the composition and the hot corrosion products being removed. The component may be lowered into the bath using a suitable rack (for example, one having a polypropylene or other non-conductive surface) that can be raised to remove the component after the desired immersion time is reached. Immersion time and bath temperature will depend on many of the factors described above, such as the type of corrosion products being removed and the acid (or acids) being used in the bath.

Baths comprising the cleaning composition are often stirred or otherwise agitated while the process is carried out to permit maximum contact between the cleaning composition and the corrosion products being removed. A variety of known techniques can be used for this purpose, such as using impellers, ultrasonic agitation, magnetic agitation, gas bubbling, or circulation-pumps. Immersion time in the bath will vary based on many of the factors discussed above. On a commercial scale, the immersion time will usually range from about 1 hour to about 10 hours, which may be split among two or more steps. In some embodiments, the total immersion time will be from about 1.5 to about 5 hours, typically from about 2 to about 4 hours. Longer times within the above ranges promote more complete removal of the corrosion products but can cause damage to the coating and/or substrate. Thus, the time, the concentration of acid in the composition, and the temperature of the composition are selected to provide the desired balance between maximizing removal of the corrosion products and minimizing damage to a particular coating and metal substrate.

In one embodiment, a weak acid solution, such as an acetic acid solution, e.g., white vinegar, which typically comprises from about 2% to about 10% acetic acid, more typically from about 4% to about 8% acetic acid, by weight, is used to remove hot corrosion products at certain temperatures, supplemented with sufficient agitation following a surface conditioning or activation step. Advantageously, such weak acetic acid solutions do not attack aluminide coatings, permitting rejuvenation of an aluminide coating instead of complete removal of the coating and application of a new coating. Another advantage of this invention is that acetic acid does not foul wastewater treatment facilities, and can be disposed of without concern for exceeding allowable levels for metal ion concentrations in wastewater. Accordingly, the treatment of this invention is environmentally friendly. While vinegar is generally preferred as the treatment solution of this invention due to availability and cost, it is foreseeable that stronger and weaker acetic acid solutions derived by other methods could be used.

The process of this invention typically comprises processing a component through a suitable surface pretreatment, immersing the component in an acetic acid solution at temperatures of from about 150°F to about 175°F (about 66°C to about 79°C), though temperatures between about 120°F and 200°F (about 49°C and about 93°C) are believed to be suitable. While different solution strengths are possible, acetic acid concentrations for the solution are typically from about 4% to about 6%, by weight. Complete immersion of the component ensures that all surfaces, including any internal surfaces such as those formed by cooling passages, are contacted by the solution. The surfaces of the component are then agitated, such as by ultrasonic energy, to dislodge the hot corrosion products from the component surfaces. Suitable parameters for an ultrasonic cleaning operation can be readily ascertained by those skilled in the art, with shorter durations being possible when the component is subjected to higher ultrasonic energy levels. Generally, a two-hour duration using a commercially available ultrasonic cleaner is sufficient to remove a majority of the hot corrosion products chemically bonded to an aluminide coating. A treatment time of from about two to about four hours often ensures complete removal of hot corrosion products. Following ultrasonic cleaning, the component is typically rinsed with water or another suitable rinse to remove the acetic acid solution from the internal and external surfaces of the component.

In one embodiment, the cleaning composition further comprises a wetting agent. The wetting agent reduces the surface tension of the composition, permitting better contact with the substrate and the aluminide coating, particularly on internal surfaces of metal parts, to improve cleaning of the aluminide coating. Suitable wetting agents include polyalkylene glycols, glycerol, fatty acids, soaps, emulsifiers, and surfactants. The wetting agent is usually present at a level in the range of from about 0.1 % by weight to about 5% by weight, based on the total weight of the composition.

Removal of the hot corrosion products without damaging the aluminide coating may be accomplished by various other methods known in the art. For example, the corrosion products may be removed by abrading the surface, such as by using a gentle abrasion step that minimizes damage to the coating. As an example, light grit blasting can be carried out by directing a pressurized air stream comprising aluminum oxide particles across the surface at a pressure of less than about 40 psi (about 2.8 kgf/cm²), typically less than about 20 psi (about 1.4 kgf/cm²). Various abrasive particles may be used for the grit blasting, e.g., metal oxide particles such as alumina, as well as silicon carbide, glass beads, crushed glass, sodium carbonate, and crushed corn cob. The average particle size usually is less than about 500 microns, and typically less than about 100 microns.

The grit blasting is carried out for a time period sufficient to remove the corrosion products. The duration of grit blasting in this embodiment will depend on various factors. In the case of an aluminide coating having a thickness of from about 50 microns to about 100 microns, grit blasting will usually be carried out for from about 60 seconds to about 120 seconds, when utilizing an air pressure of from about 20 psi (about 1.4 kgf/cm²) to about 30 psi (about 2.1 kgf/cm²) and grit particles having an average particle size of less than about 100 microns.

Alternatively, some processes use grit blasting prior to acid treatment to pretreat and activate the surface, and after exposure to the cleaning composition to remove residual degraded material. Special care may need to be taken to prevent grit blasting damage to the aluminide protective coating. Moreover, grit blasting cannot generally be used to remove corrosion products from internal passages or cavities in metal parts. For example, grit blasting would not be suitable for use in the internal cooling passages of high pressure turbine blades where the grit particles could block the internal passages.

Other known techniques for lightly abrading the surface may be used in lieu of grit blasting. For example, the surface may be manually scrubbed with a fiber pad, e.g., a pad with polymeric, metallic or ceramic fibers. Alternatively, the surface may be polished with a flexible wheel or belt in which alumina or silicon carbide particles have been embedded. Liquid abrasive materials may be used on the wheels or belts. For example, they may be sprayed onto a wheel in a vapor honing process. These alternative techniques can be controlled to maintain a contact force against the substrate surface that is no greater than the force used in the gentle grit blasting technique discussed above.

Other techniques may be employed to remove the corrosion products. One example is laser ablation of the surface. Alternatively, the degraded material may be scraped off the surface. In another embodiment, sound waves (e.g., ultrasonic waves), which may originate from an ultrasonic horn, can be directed against the surface to cause vibrations that can shake loose degraded material.

In some instances, the corrosion products may be removed by a more aggressive agitation, e.g., agitation with a force greater than that produced using the ultrasonic technique itself. For example, the substrate can be immersed in a bath that is rapidly stirred with a mechanical stirrer (i.e., for "general agitation"), and that is also ultrasonically stirred (i.e., for "local agitation"). Agitation can be carried out until the degraded material is shaken loose. For each of these alternative techniques, those skilled in the art would be familiar with operating adjustments that can be made to control the relevant force applied to the substrate to minimize damage to the aluminide coating.

In some embodiments, an extended rinsing step may be used to remove the corrosion products without damaging the coating. This may involve contacting the degraded material with an aqueous solution comprising a wetting agent, for example, a polyalkylene glycol such as polyethylene glycol. The wetting agent is usually present at a level of from about 0.1 % to about 5% by weight, based on the total weight of the rinsing solution. Rinsing can be carried out by a variety of techniques, but is usually undertaken by immersing the substrate in an agitated bath of the rinsing solution for a time period from about 1 minute to about 30 minutes. The extended rinsing step can remove chunks of degraded material from the coating. Any remaining thin layer of more coherent degraded material may be removed in another agitation step, or by again contacting the substrate with the cleaning composition.

In other embodiments, the degraded coating may be removed by including the step of contacting the degraded coating with a caustic material. The caustic may also clean the surface and activate the surface for any additional processing steps, such as a second cleaning step. Examples of caustics include potassium hydroxide (KOH), sodium hydroxide (NaOH), ammonium hydroxide (NH₄OH), lithium hydroxide (LiOH), triethylamine ((C₂H₅)₃N; TEA), tetramethylammonium hydroxide ((CH₃)₄NOH; TMAH), and mixtures thereof. The contact time can range from about 20 minutes to about 4 hours, although longer or shorter times may be selected depending on the properties of the particular caustic, coating and base metal.

The caustic may be in the form of a molten salt, but usually is present as an aqueous solution comprising from about 10% to about 50%, typically from about 15% to about 30%, more typically from about 17% to about 25%, of caustic, by weight of the composition. The caustic solution usually has a temperature of from about 60°C to about 100°C, typically from about 65°C to about 90°C, more typically from about 70°C to about 85°C.

The caustic solution may be applied to the substrate in a variety of ways, but as described above, the substrate is typically immersed in a bath of the caustic solution. In one embodiment, the substrate is lowered into the bath using a suitable rack (for example, one having a polypropylene or other non-conductive surface) that can be raised to remove the substrate after the desired immersion time is reached. The caustic solution is typically agitated while in contact with the substrate. In one embodiment, this is ultrasonic agitation. Alternatively, a more aggressive agitation, such as described above, may be used.

After removal of the hot corrosion products from the coating, compressed air may be blown across the substrate to remove any residual cleaning solution, particles, oxides, or abrasive particles.

After cleaning the surface of the turbine engine component, any worn parts of the component may be repaired by welding, brazing or other suitable means.

A layer of platinum is then deposited onto the cleaned surface of the turbine engine component. The platinum layer may be deposited by various methods known in the art, such as electroplating, electroless plating, or sputter coating. The thickness of the platinum layer is typically from about 2 to about 20 microns, e.g., from about 5 to about 10 microns, which is often less than the thickness of platinum required to form an acceptable platinum aluminide coating on an originally uncoated substrate. The deposition of the platinum layer is typically accomplished by placing a platinum-comprising solution into a deposition tank and depositing platinum from the solution onto the component in an electroplating process. An operable platinum-comprising aqueous solution is Pt(NH₃)₄HPO₄ having a concentration of about 4-20 grams per liter of platinum. The voltage/current source can be operated at about 0.5-10 amperes per square foot of facing article surface. The platinum layer, which is typically from about 5 to about 10 microns thick, more typically about 5 microns thick, is deposited in from about 1 hour to about 4 hours at a temperature of about 190-200°F (about 88-93°C). The platinum-plated component is optionally subjected to a diffusion vacuum heat treat cycle by heating to a temperature of from about 1700°F to about 1950°F (about 927°C to about 1066°C) for from about 0.5 to about 2 hours, prior to forming the second aluminide coating.

The component is then ready for rejuvenation of its aluminide coating by any suitable aluminizing process. During rejuvenation, a second aluminide coating is formed on the surface of the component, e.g., on those regions from which hot corrosion products are removed. Techniques for applying the new aluminide coating are known in the art. Diffused aluminide coatings can be applied by a variety of methods including pack cementation, above the pack, vapor phase, chemical vapor deposition, and slurry coating processes. For example, the component may be aluminided by a pack deposition process (e.g., CODEP) or an over-the-pack process (e.g., VPA). Forms of CODEP aluminide coating are more fully described in Levine et al., U.S. Patent 3,540,878; U.S. Patent 3,598,638 and U.S. Pat. No. 3,667,985. The aluminide coating may also include a combination with aluminum of one or more secondary elements, for example, Pt, Rh, and Pd. Such combination coatings are described in U.S. Patent 3,819,338. Various techniques are also known for applying diffusion coatings, e.g., noble metal-aluminide coatings such as platinum aluminide or palladium aluminide. A platinum aluminide coating can be applied by electrodepositing or sputtering platinum on the surface, and then aluminiding the surface, diffusing both the platinum and the aluminum. As an example in the case of platinum aluminide, platinum can initially be electroplated onto the substrate, using P-salt, Q-salt, or other suitable platinum electroplating solutions. In a second step, the platinum layer is diffusion-treated with aluminum vapor to form the platinum aluminide coating.

In the design of such gas turbine engine components, coating properties, including coating composition and thickness, are specified in selected ranges depending on the temperature and the environmental conditions the component is intended to experience. For example, the thickness and aluminum content of an aluminide coating can be controlled by varying the coating time, coating temperature, and/or aluminum activity of materials used in the coating process. Similarly, the amount of a secondary element in the coating, for example Pt, can be controlled by varying the thickness of the element deposited on a surface prior to diffusion aluminiding.

Various thermal spray techniques can then be employed for the deposition of overlay coatings, if desired. Examples include vacuum plasma spray (VPS), air plasma spray (APS), and high velocity oxy-fuel (HVOF). Other deposition techniques can be used as well, such as sputtering and physical vapor deposition (PVD), e.g., electron beam physical vapor deposition (EB-PVD).

In another aspect, the invention relates to a turbine engine component having a metal-based substrate and a platinum aluminide coating on at least one surface thereof, said coating having been upgraded from an aluminide coating originally on the component by a method comprising:
a) cleaning at least one surface of the component to remove hot corrosion products from the surface without damaging the aluminide coating;
b) depositing a layer of platinum onto the cleaned surface of the component; and then
c) forming a second aluminide coating on the surface of the component.

In one embodiment, high-pressure gas turbine engine blades are obtained that have a diffusion aluminide coating that has been attacked by hot corrosion (appears as a blue-gray coloration on the surfaces of the blades). Each blade is first pretreated by autoclaving at a temperature between 150°C and 250°C and a pressure of between 100 and 3000 psi (about 0.7 to about 21 MPa) with a caustic solution comprising sodium hydroxide. While autoclaving successfully dissolves engine oxides from the blades, hot corrosion products remain adhered to the aluminide coatings, particularly on the concave surfaces of the blades. The turbine blades are then immersed tip-down in a container of undiluted white vinegar at a temperature of about 65°C (about 150°F). The container and blades are then subjected to ultrasonic agitation for a total of two hours, after which the blades are rinsed with tap water.

After the above treatment, and without any additional processing (e.g., grit blasting or tumbling), the blue-gray colored hot corrosion product is removed from the blades. Light grit blasting can be used to remove any remaining hot corrosion products from the blades. Importantly, the vinegar solution does not attack those uncorroded regions of the coating adjacent those regions from which hot corrosion products are removed.

Instead of an autoclave pretreatment, each blade may be pretreated by a grit blasting to clean the surfaces of the blades. The blades are then immersed tip-down in a container of undiluted white vinegar at a temperature of about 65°C (about 150°F), subjected to ultrasonic agitation for a total of two hours, and then rinsed with tap water, to remove hot corrosion products from the blades.

The turbine blades can then be upgraded to have a platinum aluminide coating, as described above. Since the present method does not remove or damage the original aluminide coating, there is little or no removal of substrate metal. Turbine engine blades and other components can thus go through multiple repair cycles without loss of wall thickness. In addition, the oxidation-resistance properties of platinum aluminide coatings formed using the present method generally are equivalent to those of platinum aluminide coatings formed on components that are stripped of their original aluminide coating or that are originally uncoated.

The following examples illustrate some embodiments of this invention, but should not be construed to be any sort of limitation on its scope. In the examples, each test sample is a high-pressure turbine blade that has been used for some time in a commercial gas turbine engine. The turbine blades are made from a nickel-based superalloy, designated by the trade name René® 125.

### Example 1

Two high-pressure turbine blades, originally coated with CODEP aluminide coating and returned from service, are cleaned to remove hot corrosion products by immersing in an aqueous solution comprising about 4-8% acetic acid for about 2 hours. The solution has a temperature of about 150-175°F (about 66-77°C) and is agitated using ultrasonic energy. A layer of platinum is then deposited on the blades using an electroplating process, as described above. The thickness of the new platinum layer deposited on top of the existing CODEP coating is about 0.0002 - 0.0004 inches (about 5-10 microns).

The platinum-plated blades are then heat treated at 1900-1950°F (about 1038°C-1066°C) for 35 minutes in a vacuum furnace so that the platinum interdiffuses with the base material. A second aluminide coating is then formed on the blades by a pack cementation process at 1900°F (about 1038°C) for 2 hours using titanium-aluminide donor as the aluminum source. The thickness of this second aluminide coating is about 30 microns.

Sample blades coated by this process are subjected to oxidation testing in static air at 2050°F (about 1121°C) for 47 hours. Metallographic examination of the samples shows that they have oxidation resistance equivalent to that of blades repaired by fully stripping the original aluminide coating and depositing a platinum aluminide coating by conventional methods.

### Example 2

Two blades are processed as described in Example 1 except that the aluminiding process is an over-the-pack process using chromium-aluminum donor at 1975°F (about 1079°C) for 6 hours (VPA process). Blades coated by this method also have oxidation resistance equivalent to that of blades stripped of their original aluminide coatings and then coated by a conventional platinum aluminide process.

### Example 3

Two blades are cleaned, platinum-plated and aluminided as described in Example 1, except that the diffusion vacuum heat treatment step is not performed. Two additional blades are cleaned, platinum-plated and aluminided as described in Example 2, except that the diffusion vacuum heat treatment step is not performed.

Sample blades coated by these methods are oxidized in static air at 2050°F (about 1121°C) for 47 hours. The blades have oxidation resistance equivalent to that of blades stripped of their aluminide coatings and recoated by conventional platinum aluminide processes.

For the sake of good order, various aspects of the invention are set out in the following clauses:-
1. A method for upgrading an aluminide coating on a used turbine engine component to a platinum aluminide coating, said method comprising:
   a) cleaning at least one surface of the component to remove hot corrosion products from the surface without damaging the aluminide coating;
   b) depositing a layer of platinum onto the cleaned surface of the component; and then
   c) forming a second aluminide coating on the surface of the component.
2. A method as recited in clause 1, wherein step a) comprises immersing the component in a solution comprising acetic acid.
3. A method as recited in clause 2, wherein the solution comprises from about 4% to about 8% acetic acid.
4. A method as recited in clause 2, wherein the component is immersed in the solution for at least about two hours, and the solution is agitated using ultrasonic energy.
5. A method as recited in clause 4, wherein the solution has a temperature of from about 150°F (about 66°C) to about 175°F (about 77°C).
6. A method as recited in clause 1, wherein the platinum layer is heated to a temperature of from about 1700°F to about 1950°F (about 927°C to about 1066°C) for from about 0.5 to about 2 hours prior to forming the second aluminide coating.
7. A method as recited in clause 1, wherein the platinum layer deposited on the surface of the component has a thickness of from about 5 to about 10 microns.
8. A method as recited in clause 7, wherein the platinum layer is heated to a temperature of from about 1700°F to about 1950°F (about 927°C to about 1066°C) for from about 0.5 to about 2 hours prior to forming the second aluminide coating.
9. A method as recited in clause 8, wherein step a) comprises immersing the component in a solution comprising acetic acid that has a temperature of from about 150°F (about 66°C) to about 175°F (about 77°C), and the solution is agitated using ultrasonic energy.
10. A method as recited in clause 1, wherein the second aluminide coating has a thickness of from about 25 to about 75 microns.
11. A method as recited in clause 10, wherein the component is a turbine blade.
12. A method for upgrading an aluminide coating on a used turbine engine component to a platinum aluminide coating, said method comprising:
   a) cleaning at least one surface of the component to remove hot corrosion products from the surface without damaging the aluminide coating by immersing the component in a solution comprising acetic acid;
   b) depositing a layer of platinum having a thickness of from about 2 to about 20 microns onto the cleaned surface of the component; and then
   c) forming a second aluminide coating having a thickness of from about 10 to about 100 microns on the surface of the component.
13. A method as recited in clause 12, wherein in step a) the solution comprises from about 4% to about 8% acetic acid.
14. A method as recited in clause 12, wherein in step a) the component is immersed in the solution for at least about two hours.
15. A method as recited in clause 14, wherein the solution has a temperature of from about 150°F (about 66°C) to about 175°F (about 77°C).
16. A method as recited in clause 15, wherein the solution is agitated using ultrasonic energy.
17. A method as recited in clause 12, wherein the platinum layer deposited on the surface of the component has a thickness of from about 5 to about 10 microns.
18. A method as recited in clause 17, wherein the platinum layer is heated to a temperature of from about 1700°F to about 1950°F (about 927°C to about 1066°C) for from about 0.5 to about 2 hours prior to forming the second aluminide coating.
19. A method as recited in clause 18, wherein the second aluminide coating has a thickness of from about 25 to about 75 microns.
20. A method as recited in clause 19, wherein in step a) the solution comprises from about 4% to about 8% acetic acid, and has a temperature of from about 150°F (about 66°C) to about 175°F (about 77°C).
21. A method as recited in clause 20, wherein in step a) the component is immersed in the solution for at least about two hours, and the solution is agitated using ultrasonic energy.
22. A method as recited in clause 21, wherein the component is a turbine blade.
23. A turbine engine component having a metal-based substrate and a platinum aluminide coating on at least one surface thereof, said coating having been upgraded from an aluminide coating originally on the component by a method comprising:
   a) cleaning at least one surface of the component to remove hot corrosion products from the surface without damaging the aluminide coating;
   b) depositing a layer of platinum onto the cleaned surface of the component; and then
   c) forming a second aluminide coating on the surface of the component.
24. A turbine engine component as recited in clause 23, wherein step a) comprises immersing the component in a solution comprising acetic acid.
25. A turbine engine component as recited in clause 24, wherein the component is immersed in a solution comprising from about 4% to about 8% acetic acid for at least about two hours.
26. A turbine engine component as recited in clause 23, wherein the platinum layer deposited on the surface of the component has a thickness of from about 5 to about 10 microns.
27. A turbine engine component as recited in clause 26, wherein the platinum layer is heated to a temperature of from about 1700°F to about 1950°F (about 927°C to about 1066°C) for from about 0.5 to about 2 hours prior to forming the second aluminide coating.
28. A turbine engine component as recited in clause 27, wherein the second aluminide coating has a thickness of from about 25 to about 75 microns.
29. A turbine engine component as recited in clause 28, wherein in step a) the component is immersed in a solution comprising acetic acid for at least about 2 hours, and the solution has a temperature of from about 150°F (about 66°C) to about 175°F (about 77°C).
30. A turbine engine component as recited in clause 29, wherein the component is a turbine blade.

## Claims

1. A method for upgrading an aluminide coating on a used turbine engine component to a platinum aluminide coating, said method comprising:
a) cleaning at least one surface of the component to remove hot corrosion products from the surface without damaging the aluminide coating;
b) depositing a layer of platinum onto the cleaned surface of the component; and then
c) forming a second aluminide coating on the surface of the component.

2. A method as recited in claim 1, wherein step a) comprises immersing the component in a solution comprising acetic acid, preferably from 4% to 8% acetic acid.

3. A method as recited in claim 2, wherein the component is immersed in the solution for at least two hours, and the solution is agitated using ultrasonic energy, and preferably the solution has a temperature of from 66°C to 77°C.

4. A method as recited in any one of the preceding claims, wherein the platinum layer is heated to a temperature of from 927°C to 1066°C for from 0.5 to 2 hours prior to forming the second aluminide coating.

5. A method as recited in any one of the preceding claims, wherein the platinum layer deposited on the surface of the component has a thickness of from 5 to 10 microns.

6. A method as recited in any one of the preceding claims, wherein the second aluminide coating has a thickness of from 25 to 75 microns.

7. A turbine engine component having a metal-based substrate and a platinum aluminide coating on at least one surface thereof, said coating having been upgraded from an aluminide coating originally on the component by a method comprising:
a) cleaning at least one surface of the component to remove hot corrosion products from the surface without damaging the aluminide coating;
b) depositing a layer of platinum onto the cleaned surface of the component; and then
c) forming a second aluminide coating on the surface of the component.

8. A turbine engine component as recited in claim 7, wherein step a) comprises immersing the component in a solution comprising acetic acid, preferably from 4% to 8% acetic acid for at least two hours.

9. A turbine engine component as recited in claim 7 or 8, wherein the platinum layer deposited on the surface of the component has a thickness of from 5 to 10 microns.

10. A turbine engine component as recited in claim 7, 8, or 9, wherein the second aluminide coating has a thickness of from 25 to 75 microns.
